Europäisches Patentamt

European Patent Office

Office européen des brevets

(11) Numéro de publication : **0 424 259 B1**

(12) **FASCICULE DE BREVET EUROPEEN**

(19)

(45) Date de publication du fascicule du brevet :
**12.01.94 Bulletin 94/02**

(51) Int. Cl.⁵ : **C01B 17/04**

(21) Numéro de dépôt : **90402925.3**

(22) Date de dépôt : **18.10.90**

(54) Procédé pour améliorer le rendement en soufre d'un ensemble de production de soufre à partir d'un gaz acide renfermant de sulfure d'hydrogène.

(30) Priorité : **19.10.89 FR 8913704**

(43) Date de publication de la demande :
**24.04.91 Bulletin 91/17**

(45) Mention de la délivrance du brevet :
**12.01.94 Bulletin 94/02**

(84) Etats contractants désignés :
**AT BE DE DK ES FR GB GR IT NL SE**

(56) Documents cités :
**EP-A- 0 218 302**
**CA-A- 975 534**
**FR-A- 2 368 439**
**FR-A- 2 538 716**

(73) Titulaire : **ELF AQUITAINE PRODUCTION**
**Tour Elf 2 Place de la Coupole La Défense 6**
**F-92400 Courbevoie (FR)**

(72) Inventeur : **Kvasnikoff, Georges**
**Pré Marca**
**F-64360 Monein (FR)**
Inventeur : **Nougayrede, Jean**
**13, rue du Professeur Jacques Monod**
**F-64000 Pau (FR)**
Inventeur : **Philippe, André**
**Lotissement de la Trinité**
**F-64300 Orthez (FR)**

(74) Mandataire : **Boillot, Marc**
**Elf Aquitaine Production Département**
**Propriété Industrielle Tour Elf Cédex 45**
**F-92078 Paris La Défense (FR)**

## Description

L'invention concerne un procédé pour améliorer le rendement en soufre d'un ensemble de production de soufre à partir d'un gaz acide renfermant $H_2S$, ledit ensemble comportant une usine à soufre, puis une unité d'oxydation et d'hydrolyse suivie d'une unité d'épuration.

La production de soufre à partir d'un gaz acide renfermant $H_2S$ est généralement mise en oeuvre dans ce qu'il est convenu d'appeler une usine à soufre, c'est-à-dire dans une installation dans laquelle on introduit ledit gaz acide ainsi qu'une quantité contrôlée d'un gaz renfermant de l'oxygène libre et l'on effectue une oxydation ménagée de l'$H_2S$ du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre 0,2 et 6 % environ en volume, des composés soufrés incluant $H_2S$, $SO_2$ et du soufre vapeur et/ou vésiculaire. Dans la plupart des usines à soufre on réalise l'oxydation ménagée de l'$H_2S$ du gaz acide pour produire un effluent gazeux renfermant $H_2S$ et $SO_2$ et éventuellement du soufre élémentaire et l'on fait passer ledit effluent gazeux, après séparation du soufre qu'il peut contenir par condensation, au contact d'un catalyseur CLAUS disposé dans une ou plusieurs zones d'oxydation catalytique opérant à des températures supérieures au point de rosée du soufre contenu dans l'effluent pour former une nouvelle quantité de soufre par réaction entre $H_2S$ et $SO_2$, ledit soufre étant séparé par condensation.

Fréquemment les composés soufrés présents dans le gaz résiduaire issu de l'usine à soufre comprennent au moins l'un des dérivés COS et $CS_2$ en plus d'$H_2S$ et $SO_2$. Ces dérivés COS et $CS_2$ peuvent préexister dans la charge de gaz acide renfermant $H_2S$ amenée à l'usine à soufre ou/et être formés au cours de l'oxydation de l'$H_2S$ en soufre du fait de la présence de $CO_2$ et/ou d'hydrocarbures dans le gaz acide.

Le gaz résiduaire évacué de l'usine à soufre est couramment traité pour abaisser au maximum sa teneur globale en composés soufrés dans le but de permettre son rejet à l'atmosphère, après l'avoir incinéré, en respectant les normes imposées par la législation en matière de pollution et simultanément de récupérer ces composés soufrés sous une forme contribuant à augmenter le rendement en produits valorisables obtenus à partir du gaz traité dans l'usine à soufre.

Dans diverses techniques développées pour le traitement d'un gaz résiduaire d'usine à soufre, ledit gaz résiduaire, présentant une température inférieure à 160°C, est amené dans une unité d'épuration dans laquelle les composés $H_2S$ et $SO_2$ présents dans le gaz résiduaire réagissent entre eux pour former du soufre, ladite réaction étant effectuée à une température inférieure au point de rosée du soufre formé, et en sortie de laquelle on obtient un gaz résiduaire épuré que l'on rejette à l'atmosphère, après lui avoir fait subir une incinération.

Dans de telles techniques d'épuration, les composés organiques du soufre COS et $CS_2$ ne sont pratiquement pas retenus dans l'unité d'épuration et se retrouvent tout ou partie dans le gaz résiduaire épuré dirigé vers l'incinération, ce qui occasionne des pertes en soufre non négligeables qui limitent le rendement en soufre de l'ensemble formé de l'usine à soufre et de l'unité d'épuration à des valeurs d'environ 99 %, les pertes en soufre résultant du passage à l'incinération des composés COS et $CS_2$ représentant une fraction du rendement en soufre dudit ensemble pouvant varier d'environ 0,1 à 1 %.

En outre, comme l'unité d'épuration renferme généralement un catalyseur de la réaction de CLAUS $2H_2S + SO_2 \rightleftarrows 3/n\ S_n + 2H_2O$, qui ne permet pas une élimination totale de l'$H_2S$ et du $SO_2$ réagissant au contact dudit catalyseur, on retrouve également dans le gaz inerte résiduaire épuré dirigé vers l'incinération une certaine quantité d'$H_2S$ et de $SO_2$ résultant de cette réaction catalytique incomplète.

On voit d'ailleurs que tout excès de l'un ou l'autre de ces deux réactifs par rapport à la stoechiométrie de la réaction de CLAUS se retrouve dans le gaz résiduaire épuré formant l'effluent gazeux de l'unité d'épuration. En pratique un tel excès d'$H_2S$ ou de $SO_2$ peut exister par suite des imperfections de la régulation de l'usine à soufre destinée à maintenir un rapport molaire $H_2S : SO_2$ à 2:1, valeur correspondant à la stoechiométrie de la réaction de CLAUS, dans l'effluent gazeux issu de l'usine à soufre et dirigé vers l'unité d'épuration. En effet la régulation d'une usine à soufre est réalisée la plupart du temps en mesurant, généralement en continu, les quantités d'$H_2S$ et $SO_2$ dans l'effluent gazeux en sortie de l'usine à soufre et en utilisant les résultats de cette mesure pour commander l'ajustement du débit du gaz contenant de l'oxygène libre que l'on introduit en tête de l'usine à soufre pour réaliser l'oxydation ménagée de l'$H_2S$ du gaz acide en soufre. Plusieurs zones, dont au moins deux zones de réaction, séparent le point de mesure des quantités d'$H_2S$ et de $SO_2$ du point d'injection du gaz renfermant de l'oxygène libre dans l'usine à soufre et de ce fait le temps de réponse du processus de régulation, c'est-à-dire le temps séparant ladite mesure de l'ajustement de débit correspondant, peut atteindre plusieurs dizaines de secondes, ce qui conduit à une régulation imparfaite se traduisant par un rapport molaire $H_2S : SO_2$ différent de 2:1 en sortie d'usine à soufre.

Suivant les installations associant une unité d'épuration à une usine à soufre, on estime que les pertes en $H_2S$ ou $SO_2$ en sortie de l'unité d'épuration, qui résultent de l'imperfection de la régulation de l'usine à soufre, peuvent représenter momentanément de 0,1 à 0,3 points du rendement de l'installation sur une période plus ou moins longue.

En résumé, le gaz résiduaire issu de l'unité d'épuration d'un ensemble de production de soufre, qui comporte une usine à soufre suivie d'une unité d'épuration mettant en oeuvre la réaction de CLAUS et traite un gaz acide renfermant $H_2S$, renferme donc une certaine concentration résiduelle en les composés soufrés $H_2S$, $SO_2$, COS et $CS_2$ qui sont ensuite incinérés en $SO_2$ et rejetés à l'atmosphère. Ces composés soufrés résiduels en sortie de l'unité d'épuration, qui ne sont pas récupérés, constituent ce qu'il est convenu d'appeler les pertes en soufre de l'ensemble précité de production de soufre, ces pertes se scindant, comme expliqué plus haut, en

- pertes en COS et $CS_2$,
- pertes en $H_2S$ et $SO_2$ dues au fait que le rendement de la réaction de CLAUS de l'unité d'épuration n'est pas 100 %, et
- pertes en $H_2S$ ou $SO_2$ résultant de l'imperfection de la régulation de l'usine à soufre qui fait que le rapport molaire $H_2S : SO_2$ à la sortie de ladite usine à soufre ou, ce qui revient au même, à l'entrée de l'unité d'épuration n'est pas continuellement égal à 2.

Dans la demande de brevet européen EP-A-0346218 publiée le 13.12.1989, et correspondant à la demande de brevet français N°88 07649 du 8 juin 1988 au nom de la Demanderesse, on propose un procédé qui permet d'améliorer le rendement en soufre d'un ensemble de production de soufre du type précité en assurant une récupération quasi-totale des composés COS et $CS_2$ sous forme de soufre, ce qui de manière concomitante abaisse également la concentration des produits soufrés rejetés à l'atmosphère et améliore la qualité des rejets qui sont exempts de COS et $CS_2$.

Ledit procédé consiste à mettre le gaz résiduaire issu de l'usine à soufre en contact avec un catalyseur d'hydrolyse des composés COS et $CS_2$ en $H_2S$ opérant à une température suffisante pour produire un gaz résiduaire hydrolysé renfermant $H_2S$ et $SO_2$ et substantiellement exempt de COS et $CS_2$ et à introduire le gaz résiduaire hydrolysé dans l'unité d'épuration, après avoir amené sa température à la valeur requise pour le traitement dans ladite unité, en ajustant en continu le rapport molaire $H_2S : SO_2$ dans ledit gaz résiduaire hydrolysé à une valeur sensiblement égale à 2:1 à l'entrée de l'unité d'épuration en faisant varier le rapport des débits de gaz acide et de gaz renfermant de l'oxygène libre introduits dans l'usine à soufre.

On a maintenant trouvé un perfectionnement au procédé précité, qui permet d'améliorer la qualité de la régulation du rapport molaire $H_2S : SO_2$ dans le gaz résiduaire entrant dans l'unité d'épuration et généralement de limiter ou de réduire la teneur en $H_2S$ et $SO_2$ dudit gaz résiduaire, avec comme résultat une teneur plus faible en $H_2S$ et $SO_2$ dans le gaz résiduaire épuré issu de l'unité d'épuration et par conséquent une augmentation du rendement en soufre de l'ensemble de production de soufre.

Le procédé selon l'invention pour améliorer le rendement en soufre d'un ensemble produisant du soufre à partir d'un gaz acide renfermant $H_2S$, ledit ensemble comportant une usine à soufre, dans laquelle on introduit ledit gaz acide ainsi qu'une quantité contrôlée d'un gaz renfermant de l'oxygène libre et l'on effectue une oxydation ménagée de l'$H_2S$ du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre O,2 et 6 % environ en volume, des composés soufrés comprenant $H_2S$, $SO_2$ et au moins l'un des dérivés COS et $CS_2$, une unité d'oxydation et d'hydrolyse dans laquelle on met le gaz résiduaire issu de l'usine à soufre en contact avec un catalyseur d'hydrolyse des composés COS et $CS_2$ en $H_2S$ en opérant à une température suffisante pour produire un gaz résiduaire hydrolysé renfermant $H_2S$ et $SO_2$ et substantiellement exempt de COS et $CS_2$ et enfin une unité d'épuration, dans laquelle on fait passer le gaz résiduaire issu de l'unité d'oxydation et d'hydrolyse, après avoir amené la température dudit gaz à la valeur requise pour son passage dans l'unité d'épuration et en maintenant à une valeur substantiellement égale à 2:1 le rapport molaire $H_2S : SO_2$ dans le gaz résiduaire entrant dans ladite unité d'épuration, et on amène les composés $H_2S$ et $SO_2$ qu'il renferme à réagir entre eux pour former du soufre et obtenir en sortie de l'unité d'épuration un gaz résiduaire épuré, se caractérise en ce que l'on maintient à une valeur égale ou supérieure à 2:1 le rapport molaire $H_2S : SO_2$ dans le gaz résiduaire issu de l'usine à soufre et entrant dans l'unité d'oyxdation et d'hydrolyse en faisant varier le rapport des débits de gaz acide et de gaz renfermant de l'oxygène libre introduits dans l'usine à soufre, on introduit dans l'unité d'oxydation et d'hydrolyse un flux gazeux contenant de l'oxygène libre et effectue dans ladite unité une oxydation d'$H_2S$ en $SO_2$ et éventuellement en soufre au moyen dudit flux au contact d'un catalyseur d'oxydation de l'$H_2S$ contenu dans cette unité, et l'on maintient à la valeur substantiellement égale à 2:1 le rapport molaire $H_2S : SO_2$ dans le gaz résiduaire entrant dans l'unité d'épuration en faisant varier le débit du flux contenant de l'oxygène libre introduit dans l'unité d'oxydation et d'hydrolyse.

Avantageusement, la température de mise en oeuvre des réactions d'oxydation de l'$H_2S$ et d'hydrolyse des composés COS et $CS_2$ dans l'unité d'oxydation et d'hydrolyse est comprise entre 180°C et 700°C, ladite température étant de préférence choisie entre 250°C et 400°C.

L'unité d'oxydation et d'hydrolyse peut renfermer deux types de catalyseurs, à savoir un catalyseur d'oxydation de l'$H_2S$ par l'oxygène et un catalyseur d'hydrolyse des composés COS et $CS_2$ en $H_2S$, que l'on peut utiliser en mélange ou sous la forme de lits séparés. Avantageusement, on fait appel à un catalyseur unique choisis parmi les catalyseurs qui sont susceptibles de promouvoir simultanément les deux réactions précitées.

On peut en particulier utiliser des catalyseurs à base d'alumine, c'est-à-dire formés d'un matériau renfermant, en poids, au moins 50 % et avantageusement au moins 90 % d'alumine activée, et notamment des catalyseurs consistant en alumines activées choisies parmi les alumines activées utilisées pour promouvoir la réaction de CLAUS entre $H_2S$ et $SO_2$ donnant du soufre. On peut encore utiliser des catalyseurs résultant de l'association d'au moins un composé de métal choisi parmi Fe, Ni, Co, Cu, Zn, Cr et Mo avec un support d'alumine ou/et de silice, tels que ceux décrits notamment dans la citation FR-A-2 327 960. Conviennent encore comme catalyseurs à base d'alumine, les catalyseurs résultant de l'association d'au moins un composé de métal pris parmi Fe, Cu, Cd, Zn, Cr, Mo, W, V, Co, Ni et Bi éventuellement d'au moins un composé d'un métal noble tel que Pd, Pt, Ir et Rh avec un support consistant en une alumine activée stabilisée thermiquement, notamment par une faible quantité d'au moins un oxyde de terre rare, qui sont décrites dans la citation FR-A-2 540 092.

On peut également, pour l'oxydation et l'hydrolyse, employer des catalyseurs similaires à ceux qui résultent de l'association d'au moins un composé de métal choisi parmi Fe, Cu, Cd, Zn, Cr, Mo, W, V, Co, Ni et Bi et éventuellement d'au moins un composé d'un métal noble tel que Pd, Pt, Ir et Rh avec un support de silice ou/et d'oxyde de titane et qui sont présentés dans la citation FR-A-2 511 663.

Les catalyseurs à base d'alumine ont avantageusement des surfaces spécifiques, mesurées par la méthode d'adsorption d'azote dite méthode BET, allant de 5 $m^2/g$ à 400 $m^2/g$ et de préférence de 40 $m^2/g$ à 250 $m^2/g$.

Conviennent également comme catalyseurs d'oxydation et d'hydrolyse, les catalyseurs contenant de l'oxyde de titane et en particulier les catalyseurs consistant en oxyde de titane ou bien les catalyseurs renfermant un mélange d'oxyde de titane et d'un sulfate d'un métal alcalino-terreux choisi parmi calcium, strontium, baryum et magnésium ou encore les catalyseurs à base d'oxyde de titane et d'un support tel que silice, alumine ou zéolithe. Dans les catalyseurs à base d'oxyde de titane et d'un sulfate d'un métal alcalino-terreux, le rapport de la proportion pondérale d'oxyde de titane, exprimée en $TiO_2$, à la proportion pondérale de sulfate alcalino-terreux dans le catalyseur calciné peut aller de 99:1 à 60:40 et de préférence de 99:1 à 80:20. Les catalyseurs d'oxydation et d'hydrolyse à base d'oxyde de titane ont avantageusement

sement des surfaces spécifiques, mesurées par la méthode BET, comprises entre 5 et 400 $m^2/g$ et de préférence entre 10 et 250 $m^2/g$. Des catalyseurs renfermant de l'oxyde de titane peuvent être obtenus comme décrit, par exemple, dans la citation FR-A-2 481 145. Pour obtenir des catalyseurs renfermant de l'oxyde de titane et un sulfate de métal alcalino-terreux, on peut faire appel à l'une ou l'autre des techniques de préparation enseignées par la citation EP-A-0060741.

Le gaz résiduaire issu de l'usine à soufre et le flux gazeux contenant de l'oxygène libre, qui sont amenés à l'unité d'oxydation et d'hydrolyse, peuvent être introduits séparément dans ladite unite. On préfère toutefois réaliser tout d'abord un mélange desdits gaz, puis introduire ledit mélange dans l'unité d'oxydation et d'hydrolyse.

Le temps de séjour du mélange réactionnel renfermant le gaz résiduaire issu de l'usine à soufre et le flux gazeux contenant de l'oxygène libre au contact du catalyseur présent dans l'unité d'oxydation et d'hydrolyse peut aller de 0,5 à 10 secondes et en particulier de 1 à 6 secondes, ces valeurs étant données dans les conditions normales de pression et de température.

Pour amener le gaz résiduaire issu de l'unité d'oxydation et d'hydrolyse à la température requise pour son passage dans l'unité d'épuration, on peut opérer avantageusement par échange indirect de chaleur avec un fluide ayant une température appropriée.

Comme indiqué précédemment, dans le procédé selon l'invention le rapport molaire $H_2S : SO_2$ dans le gaz résiduaire, issu de l'usine à soufre et amené à l'unité d'oxydation et d'hydrolyse, est maintenu à une valeur égale ou supérieure à 2:1, ladite valeur pouvant être choisie d'autant plus grande que la teneur en $H_2S$ du gaz résiduaire issu de l'usine à soufre est plus faible et ne conduit pas lors de l'oxydation de l'$H_2S$ dans l'unité d'oxydation et d'hydrolyse à une élévation de la température susceptible de détériorer le catalyseur contenu dans ladite unité.

Le maintien du rapport molaire $H_2S : SO_2$ à la valeur égale ou supérieure à 2:1 dans le gaz résiduaire issu de l'usine à soufre amené à l'unité d'oxydation et d'hydrolyse peut être réalisé en faisant appel aux diverses méthodes de régulation connues pour maintenir le rapport molaire $H_2S : SO_2$ à une valeur prédéterminée dans les gaz résiduaires d'une usine à soufre par variation du rapport des débits de gaz acide et de gaz renfermant de l'oxygène libre introduits dans l'usine à soufre, ladite variation étant avantageusement effectuée en maintenant constant le débit de gaz acide amené à l'usine à soufre et en faisant varier le débit de gaz renfermant de l'oxygène libre.

Dans la plupart de ces méthodes de régulation, on effectue une analyse d'un échantillon du gaz résiduaire pour en déterminer les teneurs molaires en

$H_2S$ et $SO_2$ et produire à partir desdites teneurs une grandeur représentative de la valeur instantanée du rapport molaire $H_2S : SO_2$ dans le gaz résiduaire, puis on élabore une grandeur représentative du débit de correction du gaz renfermant de l'oxygène libre pour ramener ladite valeur instantanée du rapport molaire $H_2S : SO_2$ à la valeur prédéterminée et l'on utilise la grandeur ainsi élaborée pour ajuster le débit du gaz renfermant de l'oxygène libre introduit dans l'usine à soufre, cet ajustement de débit étant opéré soit sur la totalité du débit de gaz renfermant de l'oxygène libre ou seulement sur un débit additionnel faible s'ajoutant à un débit principal plus important et proportionnel à la quantité d'$H_2S$ présent dans le gaz acide. La technique d'analyse de l'échantillon de gaz résiduaire mise en oeuvre dans ces méthodes de régulation peut être, par exemple, une technique d'analyse par chromatographie en phase gazeuse (US-A-3 026 184 et FR-A-2 118 365), une technique d'analyse par absorption dans l'ultra-violet (THE OIL AND GAS JOURNAL, 10 Août 1970, pages 155 à 157) ou encore une technique d'analyse par spectrométrie interférentielle (FR-A-2 420 754).

Le maintien du rapport molaire $H_2S : SO_2$ à la valeur substantiellement égale à 2:1 dans le gaz résiduaire entrant dans l'unité d'épuration en faisant varier le débit du flux gazeux contenant de l'oxygène libre introduit dans l'unité d'oxydation et d'hydrolyse peut être réalisé en utilisant les méthodes de régulation auxquelles on fait appel, comme indiqué plus haut, dans le cas des usines à soufre, l'ajustement du débit du flux gazeux étant effectué sur la totalité du débit dudit flux.

La qualité de la régulation du débit du flux gazeux contenant de l'oxygène libre introduit dans l'unité d'oxydation et d'hydrolyse est pratiquement parfaite car, d'une part, le temps de réponse du système n'est que de quelques secondes et, d'autre part, le débit dudit flux gazeux à réguler est faible et peut donc être parfaitement ajusté.

Le gaz renfermant de l'oxygène libre, que l'on introduit dans l'usine à soufre pour effectuer l'oxydation ménagée de l'$H_2S$ du gaz acide, ainsi que le flux gazeux contenant de l'oxygène libre, que l'on injecte dans l'unité d'oxydation et d'hydrolyse sont généralement de l'air, bien qu'il soit possible d'employer de l'oxygène pur ou encore de l'air enrichi en oxygène ou même des mélanges, en proportions variées, d'oxygène et d'un ou plusieurs gaz inertes autres que l'azote.

Dans le procédé selon l'invention, on désigne par usine à soufre toute installation dans laquelle on introduit le gaz acide renfermant $H_2S$ ainsi qu'une quantité contrôlée d'un gaz contenant de l'oxygène libre et effectue une oxydation ménagée de l'$H_2S$ du gaz acide par l'oxygène du gaz renfermant de l'oxygène libre pour produire du soufre et en sortie de laquelle on évacue également un gaz résiduaire ayant les caractéristiques définies précédemment. En particulier, l'usine à soufre peut être une usine à soufre CLAUS dans laquelle on effectue une combustion d'une fraction de l'$H_2S$ du gaz acide dans une zone de combustion fonctionnant à température élevée pour produire un effluent gazeux renfermant $H_2S$ et $SO_2$ et éventuellement du soufre élémentaire et l'on fait passer ledit effluent gazeux, après séparation du soufre qu'il peut contenir par condensation, au contact d'un catalyseur CLAUS disposé dans une ou plusieurs zones d'oxydation catalytique opérant à des températures supérieures au point de rosée du soufre contenu dans l'effluent pour former une nouvelle quantité de soufre par réaction entre $H_2S$ et $SO_2$, ledit soufre étant séparé par condensation après chaque étape catalytique.

Dans une telle usine à soufre CLAUS, la combustion partielle de l'$H_2S$ du gaz acide pour former l'effluent renfermant $H_2S$ et $SO_2$ est réalisée à des températures comprises entre 900°C et 1600°C et la réaction entre $H_2S$ et $SO_2$ au contact du catalyseur CLAUS opérant à des températures supérieures au point de rosée du soufre contenu dans le milieu réactionnel est effectuée à des températures comprises entre 180°C et 450°C dans au moins une zone catalytique et de préférence dans une pluralité de zones catalytiques disposées en série. Dans ce dernier cas, les températures de fonctionnement des différentes zones catalytiques vont en décroissant d'une zone catalytique à la suivante. Après chacune des phases de réaction, le soufre produit contenu dans le milieu réactionnel est séparé par condensation et le milieu réactionnel substantiellement débarrassé du soufre est réchauffé jusqu'à la température choisie pour la phase subséquente de réaction. La température du gaz résiduaire issu de l'usine à soufre correspond sensiblement à la température à laquelle le milieu réactionnel produit au cours de la dernière phase de réaction dans l'usine à soufre a été refroidi pour condenser le soufre qu'il contient, ladite température étant généralement comprise entre 120°C et 160°C.

L'unité d'épuration dans laquelle on traite le gaz résiduaire oxydé et hydrolysé peut consister en toute installation permettant de produire du soufre par réaction entre $H_2S$ et $SO_2$ et d'obtenir un gaz résiduaire épuré substantiellement exempt de composés soufrés tels que $SO_2$ et $H_2S$. L'unité d'épuration peut être en particulier une unité d'épuration dans laquelle la réaction de formation de soufre entre $H_2S$ et $SO_2$ est mise en oeuvre au contact d'un catalyseur CLAUS à des températures supérieures au point de rosée du soufre formé ou au contraire à des températures inférieures audit point de rosée ou bien encore tout d'abord à des températures supérieures au point de rosée du soufre formé puis à des températures inférieures au point de rosée du soufre formé.

En particulier, on peut faire appel à une unité d'épuration catalytique dans laquelle le gaz résiduaire hydrolysé, présentant une température inférieure à 160°C, est mis en contact avec un catalyseur CLAUS pour former du soufre par réaction entre $H_2S$ et $SO_2$, en réalisant ledit contact à une température inférieure au point de rosée du soufre formé, par exemple entre 100°C et 180°C, pour que ce soufre se dépose sur le catalyseur, le catalyseur chargé de soufre étant périodiquement soumis à une régénération par balayage au moyen d'un gaz non-oxydant entre 200°C et 500°C pour vaporiser le soufre qu'il retient, puis à un refroidissement au moyen d'un gaz inerte à température inférieure à 160°C jusqu'à la température requise pour une nouvelle mise en contact avec le gaz résiduaire. Des exemples d'unités d'épuration catalytique fonctionnant comme indiqué ci-dessus sont notamment décrites dans les citations FR-A-2 180473 et FR-A-2 224 196.

Le gaz résiduaire épuré sortant de l'unité d'épuration est généralement soumis à une incinération thermique ou catalytique, pour transformer en $SO_2$ tous les composés du soufre qu'il peut encore renfermer en très faible quantité globale, avant d'être envoyé à l'atmosphère. L'hydrolyse selon l'invention des composés COS et $CS_2$ avant l'unité d'épuration facilite l'incinération thermique ou catalytique du gaz résiduaire épuré issu de ladite unité. En effet ledit gaz épuré ne renfermant plus de COS ni de $CS_2$, son incinération peut être réalisée à des températures plus basses, ce qui s'accompagne d'une économie du gaz combustible nécessaire à cette incinération.

Le catalyseur utilisé dans l'usine à soufre CLAUS de même que le catalyseur employé dans l'unité d'épuration catalytique faisant appel à un catalyseur CLAUS peuvent être choisis parmi les produits tels que bauxite, alumine, silice, zéolithes naturelles ou synthétiques, qui sont couramment utilisés pour promouvoir la réaction de formation de soufre entre $H_2S$ et $SO_2$.

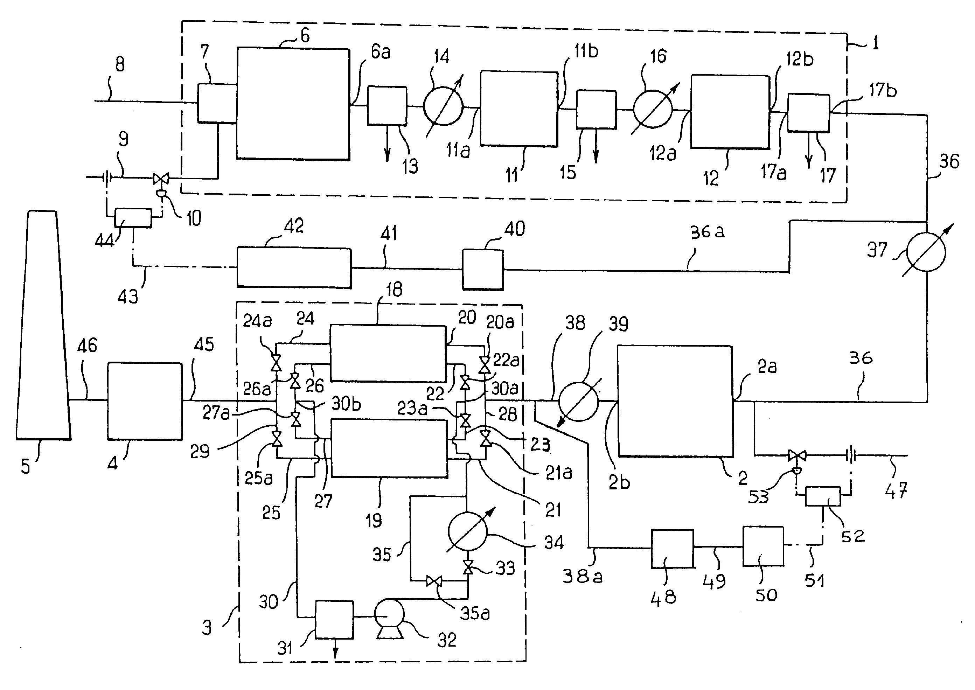

L'invention sera mieux comprise à la lecture de la description donnée ci-après de l'une de ses formes de réalisation utilisant l'installation représentée sur la figure du dessin annexé.

Cette installation associe en série une usine à soufre CLAUS 1, un réacteur 2 d'oxydation et d'hydrolyse, une unité 3 d'épuration catalytique et un incinérateur 4 relié à une cheminée 5.

L'usine à soufre 1 comprend, d'une part, une chambre de combustion 6, qui comporte un brûleur 7 pourvu d'un conduit 8 d'amenée du gaz acide et d'un conduit 9 d'amenée d'air, ce dernier conduit étant équipé d'une vanne 10 à ouverture réglable, et qui présente une sortie 6a pour les gaz, et, d'autre part, un premier convertisseur catalytique 11 et un deuxième convertisseur catalytique 12, qui comportent chacun une entrée, respectivement 11a et 12a, et une sortie, respectivement, 11b et 12b, séparées par un lit fixe d'un catalyseur CLAUS. La chambre de combustion 6 et les convertisseurs catalytiques 11 et 12 sont montés en série de telle sorte que la sortie 6a de la chambre de combustion soit reliée à l'entrée 11a du premier convertisseur 11 à travers un premier condenseur à soufre 13 puis un premier réchauffeur 14, que la sortie 11b dudit premier convertisseur soit reliée à l'entrée 12a du deuxième convertisseur 12 à travers un deuxième condenseur à soufre 15 puis un deuxième réchauffeur 16 et que la sortie 12b dudit deuxième convertisseur soit connectée à l'entrée 17a d'un troisième condenseur à soufre 17 possédant une sortie 17b pour les gaz constituant la sortie de l'usine à soufre.

L'unité d'épuration catalytique 3 comporte deux réacteurs catalytiques 18 et 19 montés en parallèle et possédant chacun, d'une part, un conduit d'entrée pour le gaz à épurer, respectivement 20 et 21, ledit conduit d'entrée étant muni d'une vanne, respectivement 20a et 21a, et un conduit d'injection, respectivement 22 et 23, d'un gaz de régénération et de refroidissement, ledit conduit d'injection étant muni d'une vanne, respectivement 22a et 23a, et, d'autre part, un conduit de sortie du gaz épuré, respectivement 24 et 25, ledit conduit de sortie étant muni d'une vanne respectivement 24a et 25a, et un conduit d'évacuation, respectivement 26 et 27, d'un effluent de régénération et de refroidissement, ledit conduit d'évacuation étant muni d'une vanne, respectivement 26a et 27a. Les conduits d'entrée, respectivement 20 et 21, des réacteurs catalytiques 18 et 19 sont connectés, à travers les vannes correspondantes 20a et 21a, à un conduit 28 constituant l'entrée de l'unité d'épuration catalytique 3. De même, les conduits de sortie, respectivement 24 et 25, desdits réacteurs catalytiques 18 et 19 sont connectés, à travers les vannes correspondantes 24a et 25a, à un conduit 29 constituant la sortie de l'unité d'épuration catalytique 3. Dans chacun des réacteurs catalytiques 18 et 19, les orifices des conduits d'entrée et d'injection sont séparés des orifices des conduits de sortie et d'évacuation par un lit fixe d'un catalyseur CLAUS. Les conduits d'injection 22 et 23 des réacteurs 18 et 19 sont montés en parallèle, à travers les vannes correspondantes 22a et 23a, à l'une des extrémités 30a d'un conduit 30 de circulation d'un gaz de régénération et de refroidissement et les conduits d'évacuation 26 et 27 desdits réacteurs sont également montés en parallèle à l'autre extrémité 30b dudit conduit 30. Sur ce conduit 30 sont montés, en allant de son extrémité 30b à son extrémité 30a, un condenseur à soufre 31, une soufflante 32, une vanne 33, un réchauffeur 34 et une dérivation 35 pourvue d'une vanne 35a, les extrémités de ladite dérivation débouchant dans le conduit 30, l'une entre la soufflante 32 et la vanne 33 et l'autre en aval du réchauffeur 34. La soufflante 32 est montée sur le circuit 30 de telle sorte que l'orifice d'aspiration de cette dernière soit relié au condenseur à soufre 31. Le conduit 29 formant la sortie de l'unité d'épuration 3 est connecté par un conduit 45 à l'incinérateur 4, lui-même relié, par un conduit 46, la cheminée 5. En outre, une première tubulure, non représentée, relie le conduit 38, amenant le gaz résiduaire oxydé et hydrolysé et refroidi à l'unité d'épuration, au circuit 30, en un point de ce dernier situé entre le condenseur 31 et la soufflante 32, et une deuxième tubulure, également non représentée, connecte ledit conduit 38, en aval du point de jonction de ce conduit 38 avec la première tubulure, au conduit 30 en un point de ce dernier situé entre la soufflante 32 et la vanne 33.

Le réacteur 2 d'oxydation et d'hydrolyse comporte une entrée 2a et une sortie 2b séparées l'une de l'autre par un lit fixe d'un catalyseur d'oxydation d'$H_2S$ et d'hydrolyse de COS et $CS_2$. La sortie 17b de l'usine à soufre 1 est connectée par un conduit 36, à travers un réchauffeur 37 du type échangeur indirect de chaleur, à l'entrée 2a du réacteur d'oxydation et d'hydrolyse et la sortie 2b dudit réacteur est connectée par un conduit 38, à travers un système de refroidissement 39 du type échangeur indirect de chaleur, au conduit 28 formant l'entrée de l'unité d'épuration. Un conduit 47 d'amenée d'air est monté en dérivation sur le conduit 36 en amont de l'entrée 2a de l'unité 2 d'oxydation et d'hydrolyse, ledit conduit 47 étant équipé d'une vanne 53 à ouverture réglable.

Un analyseur 40, par exemple du type spectromètre interférentiel, est monté par une dérivation 36a sur le conduit 36 en amont du système de refroidissement 37, ledit analyseur étant agencé pour déterminer les teneurs molaires en $H_2S$ et $SO_2$ du gaz circulant dans le conduit 36 et pour fournir un signal 41 représentatif de la valeur instantanée du rapport molaire $H_2S$ : $SO_2$ dans ledit gaz.

Le signal 41 est amené à un calculateur 42, qui élabore un signal 43 représentatif du débit d'air de correction pour ramener la valeur instantanée du rapport molaire $H_2S$ : $SO_2$ à une valeur de consigne, ledit signal 43 étant appliqué à un régulateur de débit 44, qui règle l'ouverture de la vanne 10, ce qui assure l'ajustement du débit d'air introduit dans l'usine à soufre par le conduit 9.

De même, un analyseur 48, par exemple du type spectromètre interférentiel, est monté par une dérivation 38a sur le conduit 38 en aval du système de refroidissement 39, ledit analyseur étant agencé pour déterminer les teneurs molaires en $H_2S$ et $SO_2$ du gaz circulant dans le conduit 38 et pour fournir un signal 49 représentatif de la valeur instantanée du rapport molaire $H_2S$ : $SO_2$ dans ledit gaz. Le signal 49 est amené à un calculateur 50, qui élabore un signal 51 représentatif du débit d'air de correction pour ramener la valeur instantanée du rapport molaire $H_2S$ : $SO_2$ à une valeur de consigne, en l'occurence la valeur 2:1 dans le procédé selon l'invention, ledit signal 51 étant appliqué à un régulateur de débit 52, qui règle l'ouverture de la vanne 53, ce qui assure l'ajustement du débit d'air introduit dans le réacteur 2 d'oxydation et d'hydrolyse par le conduit 47.

Le déroulement du procédé dans cette installation peut être schématisé comme suit.

On suppose que le réacteur 18 est en phase de réaction et que le réacteur 19 est en phase de régénération, les vannes 20a, 24a, 23a, 27a et 33 étant ouvertes tandis que les vannes 21a, 22a, 25a, 26a et 35a sont fermées.

Dans l'usine à soufre 1, le gaz acide renfermant $H_2S$ introduit, par le conduit 9, dans le brûleur 7 de la chambre de combustion 6 subit une combustion partielle avec formation d'un effluent gazeux renfermant $H_2S$ et $SO_2$ et du soufre élémentaire.

Cet effluent, après séparation du soufre qu'il contient dans le premier condenseur à soufre 13, est réchauffé dans le premier réchauffeur 14 et passe dans le premier convertisseur 11. Au contact du catalyseur CLAUS contenu dans ce convertisseur, les composés $H_2S$ et $SO_2$ présents dans l'effluent gazeux réagissent pour former du soufre. Le mélange réactionnel issu du convertisseur 11, après séparation du soufre qu'il contient dans le deuxième condenseur 15 puis réchauffage dans le deuxième réchauffeur 16, passe dans le deuxième convertisseur 12 où une nouvelle quantité de soufre est formée par réaction catalytique entre $H_2S$ et $SO_2$. Le mélange réactionnel issu du convertisseur 12 est débarrassé du soufre qu'il contient dans le troisième condenseur 17.

Par la sortie 17b pour les gaz dudit condenseur, qui constitue la sortie de l'usine à soufre, on évacue un gaz résiduaire renfermant de la vapeur d'eau et, en quantité globale inférieure à environ 6 % en volume, des composés soufrés comprenant $H_2S$, $SO_2$, COS et/ou $CS_2$ ainsi qu'une très faible quantité de soufre vapeur et/ou vésiculaire.

Le gaz résiduaire issu de l'usine à soufre, après réchauffage à la température appropriée dans le réchauffeur 37, est additionné d'air amené par le conduit 47 et le mélange obtenu passe dans le réacteur 2 d'oxydation et d'hydrolyse dans lequel les composés COS et $CS_2$ présents dans ledit gaz résiduaire sont hydrolysés en $H_2S$ au contact du catalyseur contenu dans le réacteur 2, tandis qu'également au contact dudit catalyseur une fraction de l'$H_2S$ contenu dans ledit gaz résiduaire est oxydé en $SO_2$ et éventuellement en soufre par l'oxygène de l'air injecté par le conduit 47. Par la sortie 2b du réacteur d'oxydation et d'hydrolyse, on évacue un gaz résiduaire hydrolysé et oxydé renfermant $H_2S$ et $SO_2$, éventuellement du soufre vapeur et substantiellement exempt de COS et $CS_2$.

L'oxygène de l'air injecté par le conduit 47 est entièrement consommé dans le réacteur 2 d'oxydation et d'hydrolyse. Le gaz résiduaire oxydé et hydrolysé, après refroidissement à la température appropriée dans le système de refroidissement 39, est introduit par le conduit 38 dans le conduit 28 de l'unité d'épuration catalytique, qui constitue l'entrée de ladite unité.

Le gaz résiduaire oxydé et hydrolysé passant par le conduit 28 est introduit dans le réacteur catalytique 18, dans lequel les composés $H_2S$ et $SO_2$ contenus dans ledit gaz résiduaire réagissent l'un sur l'autre pour former du soufre. La température du courant gazeux amené au contact du catalyseur CLAUS contenu dans le réacteur 18 est telle que le soufre formé se dépose sur le catalyseur. Par le conduit 24 du réacteur 18 sort un gaz résiduaire épuré à teneur extrêmement faible en composés soufrés, qui est dirigé, à travers la vanne 24a, le conduit 29 et le conduit 45, dans l'incinérateur 4, le gaz incinéré étant acheminé à la cheminée 5, par le conduit 46, pour être rejeté à l'atmosphère.

Un courant de gaz de balayage, véhiculé dans le circuit 30 de régénération sous l'action de la soufflante 32, est porté dans le réchauffeur 34 à la température requise pour la régénération du catalyseur CLAUS sur lequel le soufre s'est déposé. Le courant de gaz réchauffé est introduit dans le réacteur 19 par le conduit 23 à travers la vanne 23a et balaie le catalyseur CLAUS chargé de soufre contenu dans ledit réacteur. Le courant de gaz de balayage entraînant le soufre vaporisé sort du réacteur 19 par le conduit 27 et s'écoule, à travers la vanne 27a, et le conduit 30 jusqu'au condenseur à soufre 31, dans lequel la majeure partie du soufre se sépare par condensation. A la sortie du condenseur 31, le courant de gaz de balayage est repris par la soufflante 32 pour être refoulé à l'entrée du réacteur 19 à travers le réchauffeur 34.

Après une durée suffisante de balayage du catalyseur contenu dans le réacteur 19 par le gaz de balayage chaud issu du réchauffeur 34 pour éliminer complètement le soufre déposé sur le catalyseur et ainsi régénérer ledit catalyseur, on ouvre la vanne 35a et ferme la vanne 33 de manière à court-circuiter le réchauffeur 34 et à abaisser la température du gaz de balayage à une valeur inférieure à 160°C environ et l'on poursuit le balayage pendant une durée suffisante pour refroidir le catalyseur régénéré contenu dans le réacteur 19. Lorsque ledit catalyseur a été refroidi à une température convenable permettant la mise en contact du catalyseur avec le courant gazeux en provenance du réacteur 2 d'oxydation et d'hydrolyse, on permute les rôles joués par les réacteurs 18 et 19, c'est-à-dire qu'on amène le réacteur 19 en phase de réaction CLAUS et le réacteur 18 en phase de régénération/refroidissement. Pour ce faire, on ferme les vannes 20a, 23a, 24a, 27a et 35a et ouvre les vannes 21a, 22a, 25a, 26a et 33, puis au stade du refroidissement on ferme la vanne 33 et ouvre la vanne 35a. Pendant la période transitoire de permutation du rôle des réacteurs 18 et 19, on amène le gaz de balayage à circuler dans un conduit non représenté bipassant lesdits réacteurs. Le gaz de balayage circulant dans le circuit 30 est prélevé, par la première tubulure, sur le gaz résiduaire oxydé et hydrolysé refroidi amené à l'unité d'épuration catalytique par le conduit 38. La deuxième tubulure permet d'effectuer toute purge nécessaire du circuit 30.

L'analyseur 40 du système de régulation constitué par ledit analyseur, le calculateur 42 et le régulateur de débit 44, détermine en continu les teneurs molaires en $H_2S$ et $SO_2$ du gaz résiduaire issu de l'usine à soufre et passant dans le conduit 36 en amont du système de refroidissement 37 disposé à la suite de ladite usine à soufre et délivre un signal 41 représentatif de la valeur instantanée du rapport molaire $H_2S$ : $SO_2$ dans ledit gaz résiduaire.

A partir du signal 41, le calculateur 42 élabore un signal 43 représentatif du débit de correction de l'air injecté dans l'usine à soufre pour ramener la valeur instantanée du rapport molaire $H_2S$ : $SO_2$ dans le gaz résiduaire entrant dans l'unité 2 d'oxydation et d'hydrolyse à la valeur de consigne. En réponse au signal 43 qu'il reçoit du calculateur 42, le régulateur 44 règle l'ouverture de la vanne 10 montée sur le conduit 9 d'amenée d'air à l'usine à soufre 1 et fait ainsi varier le débit d'air, introduit dans ladite usine à soufre, d'une quantité qui permet de maintenir à la valeur de consigne le rapport molaire $H_2S$ : $SO_2$ dans le gaz résiduaire admis dans le réacteur 2 d'oxydation et d'hydrolyse.

De même, l'analyseur 48 du système de régulation constitué par ledit analyseur, le calculateur 50 et le régulateur de débit 52, détermine en continu les teneurs molaires en $H_2S$ et $SO_2$ du gaz résiduaire oxydé et hydrolysé passant dans le conduit 38 en aval du système de refroidissement 39 disposé à la suite du réacteur 2 et délivre un signal 49 représentatif de la valeur instantanée du rapport molaire $H_2S$ : $SO_2$ dans ledit gaz résiduaire. A partir du signal 49, le calculateur 50 élabore un signal 51 représentatif du débit de correction de l'air injecté dans le conduit 36, par le conduit 47, à l'entré du réacteur 2 pour ramener la valeur instantanée du rapport molaire $H_2S$ : $SO_2$ dans le gaz résiduaire entrant dans l'unité 3 d'épuration catalytique à la valeur de consigne 2:1. En réponse au signal 51 qu'il reçoit du calculateur 50, le régulateur 52 règle l'ouverture de la vanne 53 montée sur le conduit 47 et fait ainsi varier le débit d'air, introduit dans le réacteur 2 d'oxydation et d'hydrolyse, d'une quantité qui permet de maintenir à la valeur 2:1 le rapport molaire $H_2S$ : $SO_2$ dans le gaz résiduaire hydrolysé et oxydé admis dans l'unité 3 d'épuration catalytique.

Pour compléter la description qui vient d'être donnée du procédé selon l'invention, on donne ci-après, à titre non limitatif, un exemple de mise en oeuvre dudit procédé.

EXEMPLE :

En faisant appel à une installation analogue à celle qui est schématisée sur la figure du dessin annexé et fonctionne comme décrit précédemment, on produisait du soufre à partir d'un gaz acide renfermant, en volume, 80 % d'$H_2S$, 4 % d'$H_2O$, 15,2 % de $CO_2$, 0,73 % de $CH_4$, 0,05 % de $C_2H_6$ et 0,02 % d'alcanes linéaires en $C_6$-$C_7$.

Le catalyseur placé dans le réacteur 2 d'hydrolyse consistait en extrudés, de 4 mm de diamètre, d'oxyde de titane renfermant 10 % en poids de sulfate de calcium.

Le catalyseur CLAUS présent dans les convertisseurs catalytiques 11 et 12 de l'usine à soufre 1 ainsi que dans les réacteurs 18 et 19 de l'unité 3 d'épuration catalytique était formé de billes, de 2 à 5 mm de diamètre, d'une alumine présentant une aire spécifique d'environ 240 m²/g.

Dans l'usine à soufre 1, la chambre de combustion 6 et les convertisseurs catalytiques 11 et 12 opéraient à des températures égales respectivement à environ 1150°C, 300°C et 240°C.

A la sortie 17b de l'usine à soufre, on évacuait un gaz résiduaire ayant une température de 132°C et une pression absolue de 1,15 bars.

Ce gaz résiduaire avait la composition suivante en pourcentage en volume, hors soufre vapeur et vésiculaire.

$N_2$ : 56,06
$H_2O$ : 33,92
$H_2S$ : 0,76
$H_2$ : 2,49
CO : 0,67
$SO_2$ : 0,32
$CO_2$ : 5,69
COS : 0,05
$CS_2$ : 0,04

Le rendement de récupération de soufre de l'usine à soufre 1 était égal à 96 %.

Le gaz résiduaire évacué de l'usine à soufre était porté à 290°C dans le réchauffeur 37, puis était additionné d'un faible débit d'air représentant environ 1% du débit d'air admis dans l'usine à soufre et le mélange obtenu passait dans le réacteur 2 d'oxydation et d'hydrolyse à ladite température. Le temps de séjour du mélange réactionnel au contact du catalyseur contenu dans ledit réacteur 2 était égal à 3 secondes dans les conditions normales de pression et de température.

Le gaz résiduaire oxydé et hydrolysé sortant du réacteur 2 ne renfermait plus que des traces de COS et $CS_2$, le taux d'hydrolyse de ces composés étant supérieur à 99 %, et sa teneur globale en $H_2S$ et $SO_2$ était inférieure à celle que l'on pouvait prévoir à partir des seules réactions d'hydrolyse de COS et $CS_2$ et de l'oxydation d'une fraction d'$H_2S$ en $SO_2$, ce qui indique que du soufre s'est également formé par la réaction de CLAUS

$$2\ H_2S + SO_2 \rightleftarrows 3/n\ S_n + 2\ H_2O$$

La température en sortie du réacteur 2 était égale à 303°C, le gaz résiduaire oxydé et hydrolysé issu dudit réacteur ne renfermant plus d'oxygène.

Le gaz résiduaire oxydé et hydrolysé était refroidi à 130°C par passage dans le système de refroidissement 39, puis était injecté, à cette température et avec un rapport molaire $H_2S$ : $SO_2$ maintenu à la valeur 2:1 par le système de régulation agissant sur la vanne 53 montée sur le conduit 47, dans celui des réacteurs catalytiques 18 et 19 de l'unité 3 d'épuration catalytique fonctionnant en phase de réaction CLAUS. Par le conduit 29, connecté à la sortie dudit réacteur et formant la sortie de l'unité 3 d'épuration catalytique, on évacuait un gaz résiduaire épuré ayant une température d'environ 145°C et renfermant une teneur globale en produits soufrés égale à 1000 p.p.m. en volume, ledit gaz épuré étant acheminé vers l'incinérateur 4 par le conduit 45. L'incinération avait lieu à 450°C par combustion d'un gaz combustible avec un léger excès d'air conduisant à 1 % en volume d'oxygène dans le gaz incinéré envoyé à la cheminée.

Le gaz de balayage utilisé pour la régénération du catalyseur chargé de soufre contenu dans le réacteur en phase de régénération puis refroidissement était constitué d'une partie du gaz résiduaire oxydé et hydrolysé refroidi prélevée sur le conduit 38 par la première tubulure et était introduit dans le réacteur en phase de régénération après avoir été amené à une température comprise entre 300°C et 350°C dans le réchauffeur 34 du circuit de régénération. Le gaz de balayage chargé de soufre issu du réacteur en phase de régénération passait ensuite dans le condenseur à soufre 31 du circuit de régénération, pour y être refroidi à environ 125°C de manière à séparer par condensation la plus grande partie du soufre qu'il contenait, puis retournait au réchauffeur 34 pour être réutilisé pour la régénération. Le catalyseur régénéré était ensuite refroidi à la température d'environ 130°C en faisant passer dans le réacteur le contenant le gaz de balayage issu du condenseur 31 et circulant dans la dérivation 35 court-circuitant le réchauffeur 34.

Les réacteurs catalytiques 18 et 19 opéraient alternativement pendant 30 heures en phase d'épuration, c'est-à-dire en phase de réaction, et pendant 30 heures, dont 10 heures de refroidissement, en phase de régénération/refroidissement.

Le rendement en soufre de l'ensemble comportant l'usine à soufre, l'unité d'oxydation et d'hydrolyse et l'unité d'épuration catalytique était égal à 99,7 %.

## Revendications

1. Procédé pour améliorer le rendement en soufre d'un ensemble produisant du soufre à partir d'un gaz acide renfermant $H_2S$, ledit ensemble comportant une usine à soufre, dans laquelle on introduit ledit gaz acide ainsi qu'une quantité contrôlée d'un gaz renfermant de l'oxygène libre et l'on effectue une oxydation ménagée de l'$H_2S$ du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre 0,2 et 6 % environ en volume, des composés soufrés comprenant $H_2S$, $SO_2$ et au moins l'un des dérivés COS et $CS_2$, une unité d'oxydation et d'hydrolyse dans laquelle on met le gaz résiduaire issu de l'usine à soufre en contact avec un catalyseur d'hydrolyse des composés COS et $CS_2$ en $H_2S$ en opérant à une température suffisante pour produire un gaz résiduaire hydrolysé renfermant $H_2S$ et $SO_2$ et substantiellement exempt de COS et $CS_2$ et enfin une unité d'épuration, dans laquelle on fait passer le gaz résiduaire issu de l'unité d'oxydation et d'hydrolyse, après avoir amené la température dudit gaz à la valeur requise pour son passage dans l'unité d'épuration et en maintenant à une valeur substantiellement égale à 2:1 le rapport molaire $H_2S : SO_2$ dans le gaz résiduaire entrant dans ladite unité d'épuration, et on amène les composés $H_2S$ et $SO_2$ qu'il renferme à réagir entre eux pour former du soufre et obtenir en sortie de l'unité d'épuration un gaz résiduaire épuré, caractérisé en ce que l'on maintient à une valeur égale ou supérieure à 2:1 le rapport molaire $H_2S : SO_2$ dans le gaz résiduaire issu de l'usine à soufre et entrant dans l'unité d'oxydation et d'hydrolyse en faisant varier le rapport des débits de gaz acide et de gaz renfermant de l'oxygène libre introduits dans l'usine à soufre, on introduit dans l'unité d'oxydation et d'hydrolyse un flux gazeux contenant de l'oxygène libre et effectue dans ladite unité une oxydation d'$H_2S$ en $SO_2$ et éventuellement en soufre au moyen dudit flux au contact d'un catalyseur d'oxydation de l'$H_2S$ contenu dans cette unité, et l'on maintient à la valeur substantiellement égale à 2:1 le rapport molaire $H_2S : SO_2$ dans le gaz résiduaire entrant dans l'unité d'épuration en faisant varier le débit du flux gazeux contenant de l'oxygène libre introduit dans l'unité d'oxydation et d'hydrolyse.

2. Procédé selon la revendication 1, caractérisé en ce que l'on met en oeuvre les réactions d'oxydation de l'$H_2S$ et d'hydrolyse des composés COS et $CS_2$ dans l'unité d'oxydation et d'hydrolyse à des températures comprises entre 180°C et 700°C et de préférence entre 250°C et 400°C.

3. Procédé selon la revendication 1 ou 2, caractérisé en ce que le temps de séjour du mélange réactionnel renfermant le gaz résiduaire issu de l'usine à soufre et le flux gazeux contant de l'oxygène libre au contact du catalyseur présent dans l'unité d'oxydation et d'hydrolyse, exprimé dans les conditions normales de pression et de température, va de 0,5 à 10 secondes et plus particulièrement de 1 à 6 secondes.

4. Procédé selon l'une des revendications 1 à 3, caractérisé en ce que le gaz résiduaire issu de l'usine à soufre et le flux gazeux contenant de l'oxygène libre sont amenés à l'unité d'oxydation et d'hydrolyse soit séparément soit sous la forme d'un mélange.

5. Procédé selon l'une des revendications 1 à 4, caractérisé en ce que l'unité d'oxydation et d'hydrolyse renferme un catalyseur choisi parmi les catalyseurs susceptibles de promouvoir simultanément les réactions d'oxydation de l'$H_2S$ par l'oxygène en $SO_2$ et l'hydrolyse des composés COS et $CS_2$ en $H_2S$.

6. Procédé selon la revendication 5, caractérisé en ce que le catalyseur présent dans l'unité d'oxydation et d'hydrolyse renferme au moins 50 % en poids et plus particulièrement au moins 90 % en poids d'une alumine activée.

7. Procédé selon la revendication 6, caractérisé en ce que ledit catalyseur consiste en une alumine activée.

8. Procédé selon la revendication 6 ou 7, caractérisé en ce que le catalyseur à base d'alumine présent dans l'unité d'oxydation et d'hydrolyse a une surface spécifique, déterminée par la méthode BET, allant de 5 $m^2/g$ à 400 $m^2/g$ et de préférence de 40 $m^2/g$ à 250 $m^2/g$.

9. Procédé selon la revendication 5, caractérisé en ce que le catalyseur présent dans l'unité d'oxydation et d'hydrolyse est choisi dans le groupe formé par a) les catalyseurs résultant de l'association d'au moins un composé d'un métal choisi parmi Fe, Ni, Co, Cu, Zn, Cr et Mo avec un support d'alumine ou/et de silice et b) les catalyseurs résultant de l'association d'au moins un composé de métal choisi parmi Fe, Cu, Cd, Zn, Cr, Mo, W, V, Co, Ni et Bi et éventuellement d'au moins un composé d'un métal noble tel que Pd, Pt, Ir et Rh avec soit un support de silice ou/et d'oxyde de titane soit un support consistant en une alumine activée stabilisée thermiquement, notamment par une faible quantité d'au moins un oxyde de terre rare.

10. Procédé selon la revendication 5, caractérisé en ce que le catalyseur présent dans l'unité d'oxydation et d'hydrolyse renferme de l'oxyde de titane.

11. Procédé selon la revendication 5, caractérisé en ce que le catalyseur présent dans l'unité d'oxydation et d'hydrolyse renferme de l'oxyde de titane et un sulfate d'un métal alcalinoterreux choisi parmi Ca, Sr, Ba et Mg.

12. Procédé selon la revendication 11, caractérisé en ce que la proportion pondérale d'oxyde de titane, exprimée en $TiO_2$, à la proportion pondérale de sulfate alcalino-terreux dans le catalyseur, à l'état calciné, va de 99:1 à 60:40 et de préférence de 99:1 à 80:20.

13. Procédé selon l'une des revendications 10 à 12, caractérisé en ce que le catalyseur renfermant de l'oxyde de titane présente une surface spécifique, mesurée par la méthode BET, comprise entre 5 m²/g et 400 m²/g et de préférence entre 10 m²/g et 250 m²/g.

14. Procédé selon l'une des revendications 1 à 13, caractérisé en ce que le rapport molaire $H_2S$ : $SO_2$ dans le gaz résiduaire, issu de l'usine à soufre et amené à l'unité d'oxydation et d'hydrolyse, a une valeur supérieure à 2:1 d'autant plus grande que la teneur en $H_2S$ du gaz résiduaire issu de l'usine à soufre est plus faible et ne conduit pas lors de l'oxydation de l'$H_2S$ dans l'unité d'oxydation et d'hydrolyse à une élévation de la température susceptible de détériorer le catalyseur contenu dans ladite unité.

15. Procédé selon l'une des revendications 1 à 14, caractérisé en ce que le maintien du rapport molaire $H_2S$ : $SO_2$ à la valeur désirée dans le gaz résiduaire issu de l'usine à soufre et amené à l'unité d'oxydation et d'hydrolyse est réalisé en maintenant constant le débit de gaz acide introduit dans l'usine à soufre et en faisant varier le débit de gaz renfermant de l'oxygène libre introduit dans ladite usine à soufre.

16. Procédé selon la revendication 15, caractérisé en ce que le maintien dudit rapport molaire $H_2S$ : $SO_2$ à la valeur choisie égale ou supérieure à 2:1 est réalisé en analysant le gaz résiduaire issu de l'usine à soufre et amené à l'unité d'oxydation et d'hydrolyse pour en déterminer les teneurs molaires en $H_2S$ et $SO_2$ et en produisant à partir desdites teneurs une grandeur représentative de la valeur instantanée dudit rapport molaire $H_2S$ : $SO_2$, puis en élaborant une grandeur représentative du débit de correction du gaz renfermant de l'oxygène libre pour ramener ladite valeur instantanée à la valeur choisie et en utilisant la grandeur ainsi élaborée pour ajuster le débit du gaz renfermant de l'oxygène libre introduit dans l'usine à soufre, cet ajustement de débit étant opéré soit sur la totalité du débit de gaz renfermant de l'oxygène libre ou seulement sur un débit additionnel faible s'ajoutant à un débit principal plus important proportionnel à la quantité d'$H_2S$ présent dans le gaz acide.

17. Procédé selon l'une des revendications 1 à 16, caractérisé en ce que le maintien du rapport molaire $H_2S$ : $SO_2$ à la valeur 2:1 dans le gaz résiduaire oxydé et hydrolysé entrant dans l'unité d'épuration est réalisé en analysant ledit gaz résiduaire pour en déterminer les teneurs molaires en $H_2S$ et $SO_2$ et en produisant à partir desdites teneurs une grandeur représentative de la valeur instantanée dudit rapport molaire $H_2S$ : $SO_2$, puis en élaborant une grandeur représentative du débit de correction du flux gazeux contenant de l'oxygène libre pour ramener ladite valeur instantanée à la valeur 2:1 et en utilisant la grandeur ainsi élaborée pour ajuster le débit dudit flux gazeux introduit dans l'unité d'oxydation et d'hydrolyse.

**Patentansprüche**

1. Verfahren zur Verbesserung der Schwefelausbeute einer Anlage, die ausgehend von einem $H_2S$ enthaltenden sauren Gas Schwefel produziert, wobei die Anlage eine Schwefelerzeugungsanlage, der das saure Gas sowie eine kontrollierte Menge eines freien Sauerstoff enthaltenden Gases zugeführt werden, in der man mit Hilfe des Sauerstoffs des freien Sauerstoff enthaltenden Gases eine schonende Oxidation des $H_2S$ des sauren Gases durchführt, um Schwefel zu erzeugen, und an deren Ausgang man ein Restgas abführt, das Wasserdampf und insgesamt etwa 0,2 bis 6 Volumenprozent Schwefelverbindungen umfaßt, die $H_2S$, $SO_2$ und wenigstens eines der Derivate COS und $CS_2$ enthalten, eine Oxidations- und Hydrolyseanlage, in der das aus der Schwefelerzeugungsanlage stammende Restgas mit einem Katalysator zur Hydrolyse der Verbindungen COS und $CS_2$ in $H_2S$ in Berührung gebracht wird, wobei bei einer Temperatur gearbeitet wird, die ausreicht, um ein hydrolysiertes Restgas zu erzeugen, welches $H_2S$ und $SO_2$ enthält und im wesentlichen frei von COS und $CS_2$ ist, und schließlich eine Reinigungsanlage umfaßt, durch die das aus der Oxidations- und Hydrolyseanlage stammende Restgas geführt wird, nachdem die Temperatur des Gases auf den für seinen Durchgang in der Reinigungsanlage erforderlichen Wert gebracht wurde, wobei das Molverhältnis $H_2S$ : $SO_2$ in dem in die Reinigungsanlage eintretenden Restgas auf einem Wert gehalten wird, der im wesentlichen 2:1 entspricht, und man die in ihm enthaltenen Verbindungen $H_2S$ und $SO_2$ miteinander reagieren läßt, um Schwefel zu bilden und um am Ausgang der Reinigungsanlage ein gereinigtes Restgas zu erhalten, dadurch gekennzeichnet, daß das Molverhältnis $H_2S : SO_2$ in dem aus der Schwefelerzeugungsanlage austretenden und in die Oxidations- und Hydrolyseanlage eintretenden Restgas auf einem Wert 2:1 oder darüber gehalten wird, indem das Verhältnis der Durchflußmengen des sauren Gases und des freien Sauerstoff enthaltenden Gases, die der Schwefelerzeugungsanlage zugeführt werden, variiert wird, daß in die Oxidations- und Hydrolyseanlage ein freien Sauerstoff enthaltender Gasstrom eingeführt wird, daß in der Anlage eine Oxidation von $H_2S$ zu $SO_2$ und gegebenenfalls zu Schwefel mittels dieses Stroms in Kontakt mit einem in dieser Anlage enthaltenen Katalysator für die Oxidation von $H_2S$ durchgeführt wird, und daß das Molverhältnis $H_2S : SO_2$ in dem in die Reinigungsanlage eintretenden Restgas im wesentlichen auf einem Wert 2:1 gehalten wird, indem die Durchflußmenge des freien Sauerstoff enthaltenden Gasstroms, der in die Oxidations- und Hydrolyseanlage eingeführt wird, variiert wird.

2.  Verfahren nach Anspruch 1, dadurch gekennzeichnet, daß die Oxidationsreaktionen des $H_2S$ und die Hydrolysereaktionen der Verbindungen COS und $CS_2$ in der Oxidations- und Hydrolyseanlage bei Temperaturen zwischen 180°C und 700°C und vorzugsweise zwischen 250°C und 400°C durchgeführt werden.

3.  Verfahren nach Anspruch 1 oder 2, dadurch gekennzeichnet, daß die Verweildauer des Reaktionsgemischs, welches das aus der Schwefelerzeugungsanlage stammende Restgas und den freien Sauerstoff enthaltenden Gasstrom umfaßt, in Kontakt mit dem in der Oxidations- und Hydrolyseanlage enthaltenen Katalysator, unter normalen Druck- und Temperaturbedingungen 0,5 bis 10 Sekunden und insbesondere 1 bis 6 Sekunden beträgt.

4.  Verfahren nach einem der Ansprüche 1 bis 3, dadurch gekennzeichnet, daß das aus der Schwefelerzeugungsanlage stammende Restgas und der freien Sauerstoff enthaltende Gasstrom der Oxidations- und Hydrolyseanlage entweder getrennt oder in Form eines Gemischs zugeführt werden.

5.  Verfahren nach einem der Ansprüche 1 bis 4, dadurch gekennzeichnet, daß die Oxidations- und Hydrolyseanlage einen Katalysator enthält, welcher unter den Katalysatoren ausgewählt wird, die geeignet sind, gleichzeitig die Oxidationsreaktionen von $H_2S$ durch Sauerstoff zu $SO_2$ und die Hydrolyse der Verbindungen COS und $CS_2$ zu

$H_2S$ zu bewirken.

6.  Verfahren nach Anspruch 5, dadurch gekennzeichnet, daß der in der Oxidations- und Hydrolyseanlage enthaltene Katalysator wenigstens 50 Gewichtsprozent und insbesondere wenigstens 90 Gewichtsprozent aktivierte Tonerde enthält.

7.  Verfahren nach Anspruch 6, dadurch gekennzeichnet, daß der Katalysator aus einer aktivierten Tonerde besteht.

8.  Verfahren nach Anspruch 6 oder 7, dadurch gekennzeichnet, daß der in der Oxidations- und Hydrolyseanlage enthaltene Katalysator auf Tonerdebasis eine nach der BET-Methode bestimmte spezifische Oberfläche von 5 m$^2$/g bis 400 m$^2$/g und vorzugsweise von 40 m$^2$/g bis 250 m$^2$/g hat.

9.  Verfahren nach Anspruch 5, dadurch gekennzeichnet, daß der in der Oxidations- und Hydrolyseanlage enthaltene Katalysator unter einer der folgenden Gruppen ausgewählt wird: a) Katalysatoren, die durch Assoziation von wenigstens einer Verbindung eines unter Fe, Ni, Co, Cu, Zn, Cr und Mo ausgewählten Metalls mit einem Träger aus Tonerde oder/und aus Kieselerde erhalten werden, und b) Katalysatoren, die durch Assoziation von wenigstens einer Verbindung eines unter Fe, Cu, Cd, Zn, Cr, Mo, W, V, Co, Ni und Bi ausgewählten Metalls und gegebenenfalls wenigstens einer Verbindung eines Edelmetalls, wie Pd, Pt, Ir und Rh, entweder mit einem Träger aus Kieselerde oder/und aus Titanoxid oder mit einem Träger aus einer thermisch stabilisierten, insbesondere durch eine geringe Menge wenigstens eines Seltenerdoxids, aktivierten Tonerde erhalten werden.

10. Verfahren nach Anspruch 5, dadurch gekennzeichnet, daß der in der Oxidations- und Hydrolyseanlage enthaltene Katalysator Titanoxid enthält.

11. Verfahren nach Anspruch 5, dadurch gekennzeichnet, daß der in der Oxidations- und Hydrolyseanlage enthaltene Katalysator Titanoxid und ein Sulfat eines Erdalkalimetalls enthält, welches unter Ca, Sr, Ba und Mg ausgewählt wird.

12. Verfahren nach Anspruch 11, dadurch gekennzeichnet, daß das Verhältnis des Gewichtsanteils von Titanoxid, ausgedrückt als $TiO_2$, zum Gewichtsanteil des Erdalkalisulfats im Katalysator im kalzinierten Zustand von 99:1 bis 60:40 und vorzugsweise von 99:1 bis 80:20 beträgt.

13. Verfahren nach einem der Ansprüche 10 bis 12, dadurch gekennzeichnet, daß der Titanoxid enthaltende Katalysator eine nach der BET-Methode gemessene spezifische Oberfläche zwischen 5 m²/g und 400m²/g und vorzugsweise zwischen 10 m²/g und 250 m²/g hat.

14. Verfahren nach einem der Ansprüche 1 bis 13, dadurch gekennzeichnet, daß das Molverhältnis $H_2S : SO_2$ in dem Restgas, das aus der Schwefelerzeugungsanlage austritt und der Oxidations- und Hydrolyseanlage zugeführt wird, einen Wert hat, der größer ist als 2:1 und der umso größer ist, je geringer der $H_2S$-Gehalt des aus der Schwefelerzeugungsanlage stammenden Restgases ist, und der bei der Oxidation des $H_2S$ in der Oxidations- und Hydrolyseanlage nicht zu einer Temperaturerhöhung führt, die den in der Anlage enthaltenen Katalysator zu schädigen vermag.

15. Verfahren nach einem der Ansprüche 1 bis 14, dadurch gekennzeichnet, daß das Molverhältnis $H_2S : SO_2$ in dem aus der Schwefelerzeugungsanlage stammenden und der Oxidations- und Hydrolyseanlage zugeführten Restgas auf dem gewünschten Wert gehalten wird, indem die Durchflußmenge des in die Schwefelerzeugungsanlage eingeführten sauren Gases konstant gehalten und die Durchflußmenge des freien Sauerstoff enthaltenden Gases, welches in die Schwefelerzeugungsanlage eingeführt wird, variiert wird.

16. Verfahren nach Anspruch 15, dadurch gekennzeichnet, daß das Molverhältnis $H_2S : SO_2$ auf dem gewählten Wert von 2:1 oder darüber gehalten wird, indem das aus der Schwefelerzeugungsanlage stammende und der Oxidations- und Hydrolyseanlage zugeführte Restgas analysiert wird, um daraus die Molgehalte an $H_2S$ und $SO_2$ zu bestimmen, indem ausgehend von diesen Gehalten eine repräsentative Größe des momentanen Wertes des Molverhältnisses $H_2S : SO_2$ erzeugt wird, indem dann eine repräsentative Größe der korrigierten Durchflußmenge des freien Sauerstoff enthaltenden Gases erarbeitet wird, um den momentanen Wert auf den gewählten Wert zurückzuführen, und indem die so erarbeitete Größe verwendet wird, um die Durchflußmenge des in die Schwefelerzeugungsanlage eingeführten, freien Sauerstoff enthaltenden Gases einzustellen, wobei diese Einstellung der Durchflußmenge entweder bei der gesamten Durchflußmenge des freien Sauerstoff enthaltenden Gases oder nur bei einer geringen zusätzlichen, einer wesentlicheren Hauptdurchflußmenge hinzukommenden Durchflußmenge vorgenommen wird, welche zu der in dem sauren Gas vorhandenen $H_2S$-Menge proportional ist.

17. Verfahren nach einem der Ansprüche 1 bis 16, dadurch gekennzeichnet, daß das Molverhältnis $H_2S : SO_2$ auf dem Wert 2:1 in dem in die Reinigungsanlage eintretenden oxidierten und hydrolisierten Restgas gehalten wird, indem das Restgas analysiert wird, um dadurch die Molgehalte an $H_2S$ und $SO_2$ zu bestimmen, indem ausgehend von diesen Gehalten eine repräsentative Größe des momentanen Wertes des Molverhältnisses $H_2S : SO_2$ gewonnen wird, indem dann eine repräsentative Größe der korrigierten Durchflußmenge des freien Sauerstoff enthaltenden Gasstroms erarbeitet wird, um den momentanen Wert auf den Wert 2:1 zurückzuführen, und indem der so erarbeitete Größe verwendet wird, um die Durchflußmenge des in die Oxidations- und Hydrolyseanlage eingeführten Gasstroms einzustellen.

## Claims

1. Process for improving the sulphur yield of an assembly producing sulphur from an acid gas containing $H_2S$, the said assembly comprising a sulphur plant into which there is introduced the said acid gas as well as a controlled amount of a gas containing free oxygen, and the $H_2S$ of the acid gas is oxidised in a controlled manner by the oxygen in the gas containing free oxygen so as to produce sulphur, and at the outlet of which a residual gas containing water vapour and an overall quantity of approximately 0.2 to 6 volume % of sulphur compounds containing $H_2S$, $SO_2$ and at least one of the derivatives COS and $CS_2$ is discharged, an oxidation and hydrolysis unit in which the residual gas from the sulphur plant is brought into contact with a catalyst for hydrolysing the COS and $CS_2$ compounds into $H_2S$ by operating at a temperature which is sufficient to produce a hydrolysed residual gas containing $H_2S$ and $SO_2$ which is substantially free from COS and $CS_2$, and finally a purification unit through which the residual gas from the oxidation and hydrolysis unit passes after the temperature of the said gas has been brought to the value required for its passage through the purification unit and by maintaining the molar ratio of $H_2S$ to $SO_2$ in the residual gas entering the said purification unit at a value of substantially 2:1, and the compounds $H_2S$ and $SO_2$ which the said gas contains are made to react with one another such that sulphur is formed and a purified residual gas is obtained at the outlet of the purification unit, characterised in that the molar ratio of $H_2S$ to $SO_2$ in the residual gas which comes from the sulphur plant and which enters the oxidation and hydrolysis unit is maintained at a value which is equal to or greater than 2:1 by varying the ratio of the flow rates of acid gas and gas containing free oxygen introduced into the sulphur plant, a stream of gas containing free oxygen is introduced into the oxidation and hydrolysis unit, and $H_2S$ is oxidised in the said unit into $SO_2$ and optionally into sulphur by means of the said stream of gas in contact with a catalyst for oxidising the $H_2S$ present in this unit, and the molar ratio of $H_2S$ to $SO_2$ in the residual gas entering the purification unit is maintained at a value which is substantially equal to 2:1 by variation of the flow rate of the stream of gas containing free oxygen and introduced into the oxidation and hydrolysis unit.

2. Process according to Claim 1, characterised in that the reactions consisting of oxidising the $H_2S$ and hydrolysing the COS and $CS_2$ compounds are performed in the oxidation and hydrolysis unit at temperatures of between 180°C and 700°C and preferably of between 250°C and 400°C.

3. Process according to Claim 1 or 2, characterised in that the dwell time of the reactive mixture containing the residual gas from the sulphur plant and the stream of gas containing free oxygen in contact with the catalyst in the oxidation and hydrolysis unit, expressed at normal temperature and pressure, ranges from 0.5 to 10 seconds and more particularly from 1 to 6 seconds.

4. Process according to any one of Claims 1 to 3, characterised in that the residual gas from the sulphur plant and the stream of gas containing free oxygen are brought to the oxidation and hydrolysis unit either separately or in the form of a mixture.

5. Process according to any one of Claims 1 to 4, characterised in that the oxidation and hydrolysis unit contains a catalyst selected from among catalysts which can simultaneously stimulate reactions which oxidise the $H_2S$ into $SO_2$ by means of the oxygen and hydrolyse the COS and $CS_2$ compounds into $H_2S$.

6. Process according to Claim 5, characterised in that the catalyst in the oxidation and hydrolysis unit contains at least 50 weight % and more particularly at least 90 weight % of an activated alumina.

7. Process according to Claim 6, characterised in that the said catalyst consists of an activated alumina.

8. Process according to Claim 6 or Claim 7, characterised in that the alumina-based catalyst in the oxidation and hydrolysis unit has a specific surface area ranging from 5 $m^2/g$ to 400 $m^2/g$ and preferably from 40 $m^2/g$ to 250 $m^2/g$, determined by the BET method.

9. Process according to Claim 5, characterised in that the catalyst in the oxidation and hydrolysis unit is selected from the group consisting of:
   a) catalysts resulting from the combination of at least one compound of a metal selected from among Fe, Ni, Co, Cu, Zn, Cr and Mo with an alumina or/and silica support; and
   b) catalysts resulting from the combination of at least one metal compound selected from among Fe, Cu, Cd, Zn, Cr, Mo, W, V, Co, Ni and Bi and optionally at least one compound of a noble metal such as Pd, Pt, Ir and Rh with either a silica and/or titanium dioxide support or a support consisting of an activated alumina thermally stabilised in particular by a small quantity of at least one rare earth oxide.

10. Process according to Claim 5, characterised in that the catalyst in the oxidation and hydrolysis unit contains titanium oxide.

11. Process according to Claim 5, characterised in that the catalyst in the oxidation and hydrolysis unit contains titanium oxide and an alkaline earth metal sulphate selected from among Ca, Sr, Ba and Mg.

12. Process according to Claim 11, characterised in that the weight proportion of titanium oxide , expressed as $TiO_2$, relative to the weight proportion of alkaline earth sulphate in the catalyst, in the calcined state, ranges from 99:1 to 60:40 and preferably from 99:1 to 80:20.

13. Process according to any one of Claims 10 to 12, characterised in that the catalyst containing titanium oxide has a specific surface area of between 5 $m^2/g$ and 400 $m^2/g$ and preferably of between 10 $m^2/g$ and 250 $m^2/g$, measured by the BET method.

14. Process according to any one of Claims 1 to 13, characterised in that the molar ratio of $H_2S$ to $SO_2$ in the residual gas which comes from the sulphur plant and is introduced into the oxidation and hydrolysis unit has a value of more than 2:1 which is the greater, the lower the $H_2S$ content of the residual gas from the sulphur plant, and does not lead to an increase in temperature which is likely to damage the catalyst in the said unit during the $H_2S$ oxidation process.

15. Process according to any one of Claims 1 to 14, characterised in that the molar ratio of $H_2S$ to $SO_2$ is maintained at the desired value in the residual gas which comes from the sulphur plant and is introduced into the oxidation and hydrolysis unit in that the flow rate of acid gas introduced into the sulphur plant is maintained constant and the flow rate of the gas containing free oxygen introduced into the said sulphur plant is varied.

16. Process according to Claim 15, characterised in that the said molar ratio of $H_2S$ to $SO_2$ is maintained at the selected value which is equal to or greater than 2:1 by analysis of the residual gas which comes from the sulphur plant and is introduced into the oxidation and hydrolysis unit such that the $H_2S$ and $SO_2$ molar contents are determined and such that a representative magnitude of the instantaneous value of the said molar ratio of $H_2S$ to $SO_2$ is produced on the basis of the said contents, and subsequently by calculation of a representative magnitude of the corrective flow rate of the gas containing free oxygen such that the said instantaneous value is brought to the selected value and by use of the magnitude thus calculated in order to adjust the flow rate of the gas containing free oxygen introduced into the sulphur plant, this adjustment of the flow rate being performed either on the entirety of the stream of gas containing free oxygen or only on an additional low flow rate added to a greater main flow rate proportional to the amount of $H_2S$ present in the acid gas.

17. Process according to any one of Claims 1 to 16, characterised in that the molar ratio of $H_2S$ to $SO_2$ is maintained at the value of 2:1 in the oxidised and hydrolysed residual gas entering the purification unit by analysis of the said residual gas in order to determine its $H_2S$ and $SO_2$ molar contents and by producing from the said contents a representative magnitude of the instantaneous value of the said molar ratio of $H_2S$ to $SO_2$, then by calculation of a representative magnitude of the corrective flow rate of the stream of gas containing free oxygen in order to bring the said instantaneous value to the value 2:1, and by using the magnitude thus calculated in order to adjust the flow rate of the said stream of gas introduced into the oxidation and hydrolysis unit.